# FASCICULE DE BREVET EUROPEEN

(11) **EP 2 475 327 B1**
(45) Date de publication et mention de la délivrance du brevet: **03.07.2013**
(21) Numéro de dépôt: 10763817.3
(22) Date de dépôt: 06.09.2010
(51) Int. Cl.: A61D 3/00

(54) **DISPOSITIF DE REEDUCATION OU D'ASSISTANCE A LA MOBILITE D'UN ANIMAL QUADRUPEDE**
REHABILITATIONS- ODER MOBILITÄTSHILFSVORRICHTUNG FÜR EIN VIERFÜSSIGES TIER
REHABILITATION OR MOBILITY ASSISTANCE DEVICE FOR A QUADRUPED ANIMAL

(30) Priorité: 07.09.2009 FR 0904239; 02.10.2009 FR 0904721
(43) Date de publication de la demande: 18.07.2012
(73) Titulaire: Sophiadog, 91130 Ris Orangis (FR)
(72) Inventeur: DE LA CELLE, Roland, 06600 Antibes (FR); DE LA CELLE, Raymond, 91130 Ris Orangis (FR)
(74) Mandataire: Pontet, Bernard
(86) Numéro de dépôt international: PCT/FR2010/051847
(87) Numéro de publication internationale: WO 2011/027088

(56) Documents cités:
- US-A- 4 777 910
- US-A- 5 224 444

## Description

### Domaine de l'invention :

L'invention concerne le domaine des appareils de rééducation, de préparation à la rééducation ou d'assistance à la mobilité des animaux quadrupèdes, en particulier les chiens et chats, handicapés ou paralysés de leur train arrière.

### Etat de la technique et problèmes posés :

On connaît des dispositifs de soutien de la partie postérieure de l'animal ayant la forme générale d'un chariot attelé au tronc de l'animal et dispensant ce dernier de prendre appui totalement ou partiellement sur ses pattes arrière. Ces dispositifs connus compensent la fonction d'appui déficiente des pattes arrière, mais sont totalement passifs vis-à-vis de ces dernières, en ne prévoyant aucunement de les animer d'un mouvement. Or on a observé qu'il était extrêmement bénéfique de faire évoluer les membres déficients selon des mouvements adaptés afin de maintenir, ou même de rétablir les fonctions motrices de l'animal grâce à une amélioration de ses capacités musculaires, vasculaires ainsi que articulaires. Ces exercices constituent en soi un mode de rééducation ou une phase préparatoire de rééducation dont l'efficacité a été démontrée. Le dispositif décrit dans le document US 4 777 910 prévoit un système à pédales entraînées par les roues du dispositif lors de son avancée, afin de provoquer un mouvement cyclique des pattes arrière de l'animal qui sont reçues et maintenues dans des chaussons entraînés par les pédales. Toutefois ce dispositif ne permet pas de contrôler la synchronisation des mouvements des deux pattes entre elles, ni le décalage ou déphasage entre les mouvements des deux pattes. En outre, l'attelage du dispositif et son maintien par rapport à l'animal sont très sommaires et peu confortables pour l'animal. On note d'ailleurs que les pattes arrière de l'animal doivent conserver un tonus minimal sans lequel la partie postérieure de l'animal pourrait s'effondrer avec un tel dispositif.

### But de l'invention :

Le but de la présente invention est de pallier tout ou partie des inconvénients précédents.

### Objet de l'invention :

A cet effet, l'invention a pour objet un dispositif permettant à un animal quadrupède handicapé de son train arrière de se déplacer tout en exerçant automatiquement des mouvements avec ses pattes arrière, caractérisé en ce qu'il comprend :
- un châssis sur lequel sont montées deux roues latérales,
- un harnais arrière destiné à recevoir et soutenir la partie postérieure de l'animal, apte à être maintenu par le châssis,
- un axe entraîneur de type vilebrequin à deux manetons auxquels sont reliés des moyens d'entraînement des pattes arrière de l'animal, ledit axe entraîneur étant conformé de manière à mouvoir de manière synchrone et en opposition de phase, tel le mouvement d'un pédalier, chacune des deux pattes arrière de l'animal,
- des moyens de transmission apte à commander la rotation de l'axe entraîneur à partir d'au moins une roue.

Ainsi le vilebrequin assure une liaison directe entre les moyens d'entraînement de chacune des pattes arrières, ce qui garantie leur synchronisme et leur configuration déphasée à 180°. Des mouvements en opposition de phase assurent un équilibrage parfait et confortable de l'animal équipé du dispositif selon l'invention. Le dispositif est en outre robuste et adaptable à des morphologies et tailles différentes d'animaux. Le dispositif est en outre adaptable très finement à la pathologie, au comportement et au progrès de l'animal au fur et à mesure de son utilisation dans un processus de rééducation.

Selon d'autres caractéristiques avantageuses de l'invention, les moyens de transmission comprennent des moyens de verrouillage / déverrouillage assurant sélectivement la transmission effective du mouvement de rotation de l'axe entraîneur à partir d'au moins une roue ou la rupture de cette transmission.

Selon encore d'autres caractéristiques avantageuses de l'invention, l'axe entraîneur est monté à rotation de manière amovible sur le châssis.

Selon encore d'autres caractéristiques avantageuses de l'invention, le harnais arrière comporte une armature fixée au châssis par des moyens d'encliquetage, autorisant notamment un débattement vertical du harnais arrière.

Selon encore d'autres caractéristiques avantageuses de l'invention, le dispositif comporte des moyens de réglage en hauteur de la position verticale du harnais arrière par rapport au châssis, ces moyens de réglage en hauteur étant notamment du type à pignon-crémaillère.

Selon encore d'autres caractéristiques avantageuses de l'invention, le harnais arrière à la forme générale d'une ceinture entourant l'abdomen de l'animal pourvue d'une extension constituant un appui pelvien.

Selon encore d'autres caractéristiques avantageuses de l'invention, les moyens d'entraînement des pattes arrière de l'animal comprennent deux chaussons dans lesquels sont reçues et maintenues les deux pattes arrière de l'animal afin de les faire évoluer à la manière d'un pédalier.

Selon encore d'autres caractéristiques avantageuses de l'invention, le dispositif comprend des moyens d'attelage apte à relier la partie thoracique de l'animal au châssis via un harnais avant, lesdits moyens d'attelage étant en particulier pivotables par rapport au châssis.

Selon encore d'autres caractéristiques avantageuses de l'invention les moyens d'entraînement des pattes arrière de l'animal comprennent deux berceaux sur lesquels sont fixés respectivement les deux chaussons.

Selon encore d'autres caractéristiques avantageuses de l'invention, l'axe entraîneur est situé à l'avant des roues suivant la direction longitudinale avant-arrière, chaque berceau étant entraîné à l'avant par un maneton respectif de l'axe entraîneur sur lequel il est monté à rotation, et reposant à l'arrière en appui sur un axe support porté par le châssis.

Selon encore d'autres caractéristiques avantageuses de l'invention, chaque berceau comprend une partie avant abaissée conférant une garde au sol abaissée par rapport à la partie arrière.

Selon encore d'autres caractéristiques avantageuses de l'invention, l'axe entraîneur est sensiblement coaxial avec l'axe des roues, le châssis comprenant une partie antérieure et une partie postérieure, la partie postérieure comprenant elle-même un sous-ensemble rigide supérieur servant à soutenir le harnais arrière, tandis que la partie antérieure est montée à rotation par rapport à la partie postérieure autour d'un axe sensiblement vertical, la partie antérieure étant en outre reliée au harnais avant.

Selon encore d'autres caractéristiques avantageuses de l'invention, l'axe entraîneur est sensiblement coaxial avec l'axe des roues, le dispositif comprenant en outre un axe suiveur de type vilebrequin à deux manetons situé à l'avant de l'axe entraîneur, et entraîné par ce dernier via des moyens de transmission, chaque berceau étant entraîné à l'arrière par un maneton respectif de l'axe entraîneur sur lequel il est monté à rotation, et reposant à l'avant en appui sur un maneton correspondant de l'axe suiveur.

Selon encore d'autres caractéristiques avantageuses de l'invention, une seule roue est apte à entraîner l'axe entraîneur tandis que l'autre roue est libre.

Selon encore d'autres caractéristiques avantageuses de l'invention, le rapport de démultiplication entre l'axe entraîneur et la roue d'entraînement est généralement compris entre 1/3 et 1, et est en particulier de 1/2 et peut être ajusté en fonction de l'état physique de l'animal.

L'invention a encore pour objet un dispositif ayant tout ou partie des caractéristiques suivantes :
- le dispositif se compose d'un harnais en deux parties, un harnais avant et un harnais arrière, maintenu par un châssis inférieur réalisé également en deux parties, une partie antérieure et une partie postérieure, la partie postérieure comprenant elle-même un sous-ensemble rigide supérieur, servant à soutenir le harnais arrière destinée à recevoir et soutenir la partie postérieure de l'animal, la partie postérieure du châssis recevant un axe de type vilebrequin reliant à ses extrémités deux roues et fonctionnant comme un pédalier.
- le vilebrequin est muni de deux chaussons et permet de faire évoluer les deux chaussons à la manière d'un pédalier, ceux-ci évoluant excentriquement par rapport à chacune de leur roue adjacente.
- les deux chaussons sont composés d'une gouttière recevant chacun une patte arrière de l'animal et ceci jusqu'à une première ou seconde articulation de la patte arrière de l'animal et des sangles qui maintiennent l'ensemble chausson et patte.
- le dispositif comprend un système de clips qui permet de fixer les chaussons par leur face inférieure sur l'axe de vilebrequin et ceci en leur laissant la possibilité d'une libre rotation sur le dit axe de vilebrequin, les dits chaussons évoluant parallèlement entre eux et ce de manière excentrique à leur roue adjacente.
- une seule roue est solidaire du vilebrequin et sert de roue d'entrainement.
- une seule roue reste libre permettant au dispositif de pouvoir tourner /pivoter sur lui même.
- le châssis est articulé horizontalement entre sa partie antérieure et sa partie postérieure par le biais d'un axe de liaison, lui-même solidaire des parties postérieures du châssis.
- la partie antérieure du châssis est reliée à au harnais avant et sa partie postérieure au harnais arrière via le sous-ensemble de la partie postérieure du châssis. Les liaisons entre la partie antérieure du châssis et le harnais avant ainsi que entre le sous ensemble rigide avec le harnais arrière sont semi-rigides du type maintien par sangles.
- une poignée de type « poignée valise » relie les harnais avant et arrière pour permettre le déplacement de l'animal par son maitre dans le cadre d'un passage d'obstacle de type trottoir ou escalier.
- la partie postérieure du châssis dispose d'un pare-choc pour la protection des pattes de l'animal.
- une molette est vissée sur l'axe de vilebrequin en position intermédiaire entre la roue entraîneuse et un écrou dans le but de verrouiller ou pas et à volonté la dite roue entraîneuse elle même responsable de l'entrainement du vilebrequin.

L'invention a encore pour objet un dispositif ayant tout ou partie des caractéristiques suivantes :
- le dispositif est composé d'un châssis qui intègre deux roues, ces dernières sont reliées entre elles par un axe composé en son centre d'un premier vilebrequin, dit « entraîneur », d'un deuxième vilebrequin dit « suiveur » de même type situé en avant par rapport au premier et relié à ce dernier par l'intermédiaire de deux pignons et d'une chaine de transmission, deux berceaux relient également les dits vilebrequins entre eux et deux chaussons destinés à recevoir chacun une patte du dit animal, maintenue par son métatarse dans le dit chausson, sont positionnés et fixés sur les dits berceaux avec un angle donné.
- les deux vilebrequins sont de type "à double manetons" soit un gauche et un droit, qui permettent un mouvement en pédalier.
- le vilebrequin arrière entraineur évolue sur un diamètre supérieur ou inférieur au vilebrequin situé à l'avant.
- le vilebrequin entraineur relie par ses extrémités les deux roues, une seule roue étant entrainante, la seconde roue restant libre.
- les deux vilebrequins sont reliés et synchronisés entre eux par deux pignons identiques et leur chaine de transmission.
- les deux berceaux sont positionnés parallèlement entre eux et relient les deux vilebrequins et entre eux sur les manetons de ces derniers à raison d'un maneton sur chacun des dits vilebrequins.
- les dits berceaux sont reliés et articulés seulement sur le vilebrequin entraineur, ne faisant que se reposer sur le second vilebrequin par l'intermédiaire de leurs zones ou faces inférieures où ils glissent sur les manetons du vilebrequin.
- les dits berceaux sont de forme concave de façon à permettre un surbaissement de leurs points d'ancrage vis à vis des dits manetons.
- les deux chaussons sont positionnés et solidaires chacun de leur berceau respectif, par un support suivant un angle permettant ainsi d'imposer un angle qui dirigera le mouvement de révolution des pattes arrière de l'animal.

### Description détaillée de plusieurs modes de réalisation :

L'invention sera mieux comprise à la lecture de la description qui va suivre d'un mode de réalisation non limitatif de l'invention et à la lumière des dessins annexés sur lesquels :
- la figure 1 représente une vue en perspective d'un premier mode de réalisation du dispositif suivant l'invention,
- la figure 2 représente une variante de réalisation du principe de fixation du harnais arrière sur le châssis du dispositif suivant l'invention,
- la figure 3 représente une vue en perspective du harnais arrière suivant l'invention,
- la figure 4 représente schématiquement le harnais arrière de la figure 3 disposé sur la partie abdominale et pelvienne d'un animal quadrupède,
- la figure 5 représente de profil une vue schématique des roues, de l'axe vilebrequin entraîneur et des moyens d'entrainement des pattes arrière de l'animal, les moyens d'entraînement étant pourvus de deux berceaux,
- la figure 6 est une vue en perspective d'un détail de réalisation du dispositif suivant l'invention de la figure 1, illustrant un exemple de moyens de verrouillage / déverrouillage réversibles entre la roue entraîneuse et l'axe vilebrequin entraîneur,
- la figure 7 représente une vue en perspective d'un second mode de réalisation du dispositif suivant l'invention,
- la figure 8 représente une vue de face de la zone basse située entre les roues du dispositif de la figure 7,
- la figure 9 représente une vue en perspective d'un chausson de réception et de maintien d'une patte arrière d'un animal, et
- la figure 10 représente de profil et de façon analogue à la figure 5, un troisième mode de réalisation du dispositif suivant l'invention, illustrant les roues, un axe vilebrequin entraîneur, un axe vilebrequin suiveur et des moyens d'entrainement des pattes arrière de l'animal, les moyens d'entraînement étant pourvus de deux berceaux,

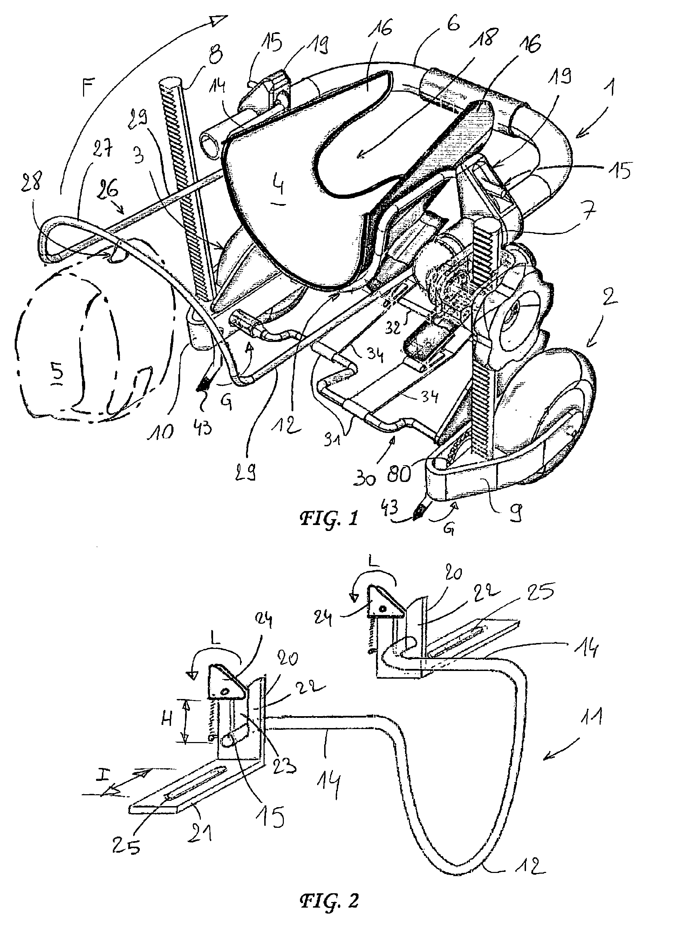

### Premier mode de réalisation (figures 1 à 6) :

On a représenté à la figure 1 un dispositif suivant l'invention. Ce dispositif se présente sous la forme générale d'un chariot destiné à être attelé au corps de l'animal. Le dispositif comprend un châssis 1 rigide constitués d'éléments mécano-soudés. Le châssis est pourvu de deux roues latérales 2, 3 disposées longitudinalement par rapport à la direction de progression avant-arrière. Dans l'ensemble de la description, les notions « avant », « arrière », « antérieur », « postérieur » sont utilisées pour définir certains éléments et sont à considérer par rapport à la direction classique de la marche de l'animal.

La partie postérieure de l'animal est équipée d'un harnais arrière 4 apte à être maintenu par le châssis 1. Ce harnais arrière 4 vise à soutenir la partie postérieure de l'animal qui s'appuie au sol via ses pattes avant.

L'animal est également équipé dans sa partie thoracique d'un harnais avant 5 (représenté en trait mixte) destiné à prendre en charge le maximum d'effort de traction du dispositif par l'animal lors de sa marche, cette zone antérieure de l'animal, délimitée par les épaules et le thorax étant la plus adaptée à assurer ces efforts et à soulager par voie de conséquence la partie postérieure de l'animal qui est handicapée. Lors de la marche de l'animal, le dispositif attelé est entraîné / tracté en roulant via ses roues 2, 3 latérales.

Le châssis 1 comprend un élément porteur 6 ayant la forme générale d'un U disposé dans un plan sensiblement horizontal et ayant son ouverture vers l'avant. L'élément porteur 6 est relié via ses deux extrémités libres (extrémités avant) du U à deux colonnes respectives 7, 8 solidaires à leur base à des moyens de structures respectifs 9, 10 sur lesquels sont montées à rotation chacune des roues 2, 3.

La liaison entre chaque extrémité libre du U 6 et la colonne correspondante 7, 8 est du type pignon-crémaillère, la crémaillère s'étendant le long de la colonne, de manière à permettre un réglage en hauteur de l'élément porteur 6 et du harnais arrière soutenant l'animal. Chaque pignon monté rotatif sur l'élément porteur 6 est commandé manuellement par une molette. Les molettes droite et gauche peuvent être synchronisées via un câble anti-torsion passant par exemple à l'intérieur de l'élément porteur 6. La figure 1 ne présente ces moyens de liaison que d'un côté pour des raisons de clarté mais il est bien entendu que sur ce point les deux côtés du dispositif sont symétriques. D'autres variantes de réalisation peuvent être envisagées pour ces moyens de liaison entre l'élément porteur 6 et les colonnes 7, 8, dès lors qu'ils assurent un guidage de l'élément porteur pour son déplacement vertical, et la possibilité d'un arrêt / maintien à une hauteur déterminée.

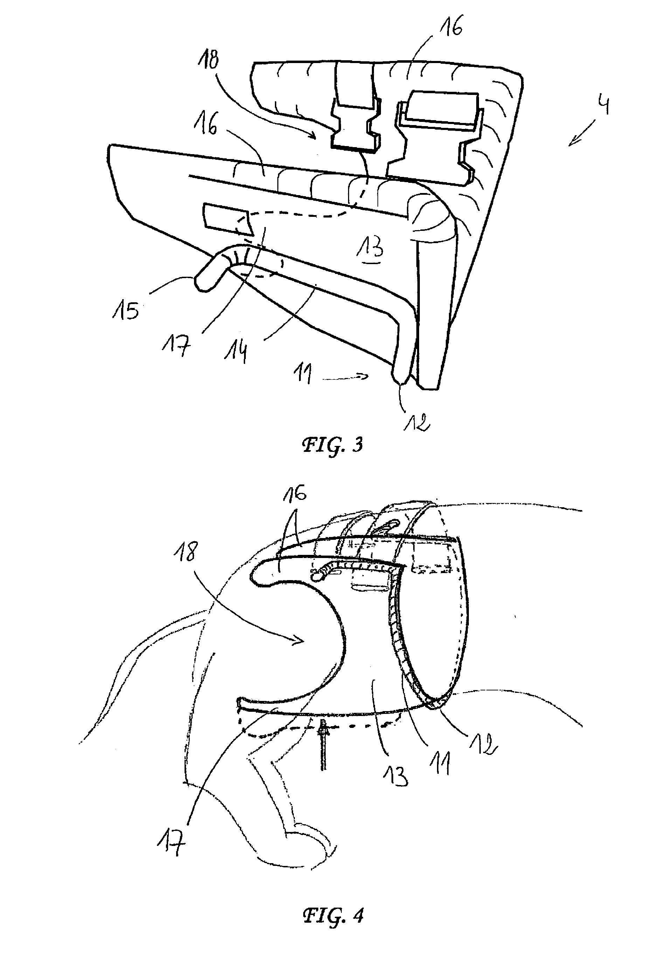

En référence aux figures 1, 3 et 4, le harnais arrière 4 comporte une armature 11 se présentant par exemple sous la forme d'un fil métallique rigide ayant également la forme générale d'un U, en vue de dessus et/ou de devant. Ce fil comporte une partie centrale 12 concave, dont la concavité est tournée vers le haut et entoure un élément de matelassure 13 également concave destiné à recevoir la partie abdominale de l'animal. Le fil métallique de l'armature 11 comporte également des branches latérales 14 s'étendant vers l'arrière du U jusqu'à des extrémités constituant des pions de fixation 15 ménagés perpendiculairement aux branches latérales 14 et s'étendant latéralement. L'élément de matelassure 13 est par exemple constitué d'une coque semi-rigide recouverte d'un garnissage en néoprène. L'élément de matelassure 13 comporte des parties latérales 16 remontant de part et d'autre du corps de l'animal et s'étendant vers l'arrière pour un soutien stable et confortable. L'élément de matelassure comporte dans sa région centrale une extension 17 vers l'arrière formant un appui pelvien pour l'animal. Des échancrures 18 sont ménagées entre chacune des parties latérales 16 et l'extension centrale 17 pour le passage des pattes de l'animal. Aucune liaison ou fermeture n'est prévue entre l'arrière des parties latérales 16 et l'arrière de l'extension 17 afin de libérer les hanches de l'animal et lui permettre de faire ses besoins. On note en outre que le harnais arrière peut comporter dans sa partie inférieure une goulotte ou une zone concave de forme adaptée permettant de recevoir les parties génitales d'un l'animal mâle. En partie supérieure, le harnais arrière est maintenu sur le corps de l'animal via un système de sangles à clipsage. Dans l'exemple illustré aux figures 3 et 4 deux sangles intégrées au harnais sont prévues pour verrouiller le harnais arrière 4 sur le dos de l'animal.

Les deux pions de fixation 15 sont destinés à être reçus dans deux supports respectifs 19, 20 solidaires des branches latérales de l'élément porteur 6. Une première variante de réalisation est illustrée à la figure 1. Une seconde variante de réalisation est illustrée à la figure 2. Dans ce dernier cas, chaque support 20 est constitué d'une équerre dont une branche horizontale 21 est fixée aux branches latérales de l'élément porteur 6 et dont une branche verticale 22 est située du côté intérieur du U formé par l'élément porteur 6. La branche verticale 22 comprend une rainure 23 de réception d'un pion de fixation 15 correspondant du harnais arrière 4.

Des moyens d'encliquetage 24 classiques sont prévus sur la branche verticale 22 de manière à permettre l'introduction du pion 15 dans la rainure et à interdire son extraction involontaire. Ces moyens d'encliquetage 24 comportent un loquet à rappel élastique, pourvu d'une rampe de glissage contre laquelle est appliqué le pion 15 lors de son introduction, ce qui provoque la rotation du loquet autour d'une d'articulation le reliant au support 20. Lorsque le pion est introduit, le loquet pivote dans le sens inverse suivant la flèche L, jusqu'à sa position de départ dans laquelle il coopère en butée avec le support 20 et ferme de ce fait l'entrée de la rainure 23 pour faire obstacle à l'extraction du pion 15. La longueur (ou hauteur) H de la rainure 23 est de quelques centimètres, de manière à autoriser un débattement vertical du pion 15 et donc de l'ensemble du harnais arrière 4, en particulier pour permettre à l'animal qui aurait tendance à s'appuyer sur ses pattes arrière de pouvoir se remuscler.

La branche horizontale 21 comporte une lumière 25 ayant une longueur I de quelques centimètres pour le passage d'une vis de fixation (non représentée) au châssis 6. Cette lumière permet de régler l'écartement entre les deux supports 20, notamment afin de recevoir des harnais arrière de plusieurs gabarits.

Dans ce mode de réalisation, le harnais avant 5 est relié au châssis 1 via un dispositif d'attelage 26 (figure 1) ayant en vue de dessus la forme générale d'un U et en vue de l'avant la forme générale d'un U inversé. Une partie avant 27 de ce dispositif d'attelage forme une concavité tournée vers le bas, formant un arceau apte à entourer de dos de l'animal sensiblement à hauteur du thorax ou du buste. Le harnais avant ayant la forme générale d'une ceinture appliquée sur le dos de l'animal, sensiblement dans la même région. Ce harnais avant 5 est maintenu sur l'animal par une sangle ventrale. Des moyens d'attache rapide 28 du type « quart de tour » ou équivalent sont prévus entre la partie avant en arceau 27 du dispositif d'attelage et le harnais avant 5. Le dispositif d'attelage 26 est articulé par rapport au châssis 1 via les extrémités arrière de ses deux branches latérales 29. La rotation s'effectue autour d'un axe transversal à la direction avant-arrière, suivant la flèche F (figure 1), permettant de basculer le dispositif d'attelage sensiblement à 180° vers l'arrière. Ainsi la partie avant du châssis 1 est libérée et permet la mise en place de l'animal préalablement équipé du harnais arrière 4 sur le châssis, avec fixation de ce harnais arrière 4 aux supports 19, 20.

L'ensemble dispositif d'attelage 26 et élément porteur 6 peuvent être ensuite rabattus de 90° en arrière et vers le bas pour permettre un pliage propice au stockage et au transport de l'appareil.

Le dispositif d'attelage 26 est ensuite rebasculé vers l'avant pour que la partie avant en arceau 27 soit disposée à l'aplomb du harnais avant 5 que l'on aura préalablement disposé sur l'animal. La fixation via les moyens d'attache rapide 28 est ensuite assurée entre le harnais avant 5 et le dispositif d'attelage 26.

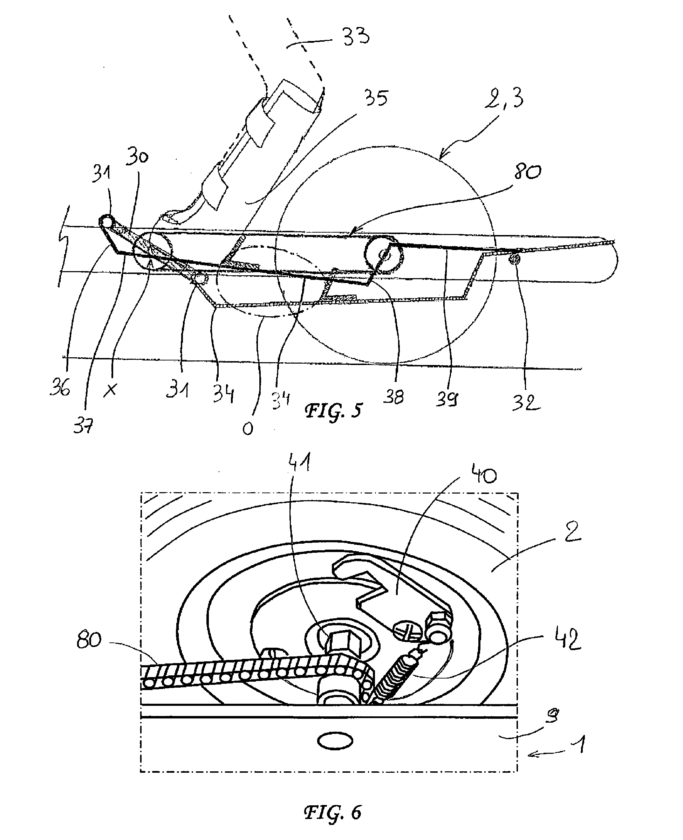

Selon un aspect essentiel de l'invention visible aux figures 1 et 5, le dispositif comprend un axe entraîneur 30 de type vilebrequin à double manetons 31, monté à rotation à la base du châssis 1 autour d'un axe transversal X à la direction avant-arrière. L'axe entraîneur 30 est entraîné par la rotation de l'une des roues latérales 2 via des moyens de transmission 80, par exemple à chaine comme illustré à la figure 1. Seule une roue 2, dite roue entraîneuse est susceptible d'entraîner l'axe entraîneur 30 tandis que l'autre roue 3 est libre par rapport au châssis 1, ceci afin de faciliter la rotation du dispositif par rapport à la verticale lors de la marche de l'animal. L'axe entraîneur 30 a pour fonction d'entraîner les pattes arrière de l'animal, de façon à les mouvoir de manière synchrone et en opposition de phase l'une par rapport à l'autre, tel le mouvement d'un pédalier. Les deux manetons 31 sont ainsi disposés à 180° degrés par rapport à l'axe de rotation X.

Dans ce mode de réalisation (figures 1 et 5), l'axe entraîneur 30 est situé à l'avant des roues 2, 3. Le dispositif comporte en outre un axe support 80 monté sur le châssis 1, transversalement à la direction avant-arrière, cet axe étant situé à l'arrière de l'axe de rotation des roues arrière 2, 3.

Des moyens d'entraînement des pattes arrière 33 de l'animal sont constitués de deux berceaux 34 de forme allongée, dirigés longitudinalement. Chaque berceau 34 est articulé dans sa partie avant à un maneton 31 correspondant de l'axe entraîneur 30 et repose à l'arrière en appui sur un axe support 80, sur lequel il glisse au contact de sa face inférieure. Chaque berceau 34 supporte un chausson 35 de réception et de maintien d'une patte arrière 33 de l'animal. Le chausson 35 est solidaire de son berceau 34 de manière à être entraîné par le mouvement cyclique de l'axe entraîneur 30. On note que chaque berceau 34 supporte le chausson 35 dans une zone qui est abaissée par rapport à au moins l'une des extrémités avant et/ou arrière du berceau 34, afin de diminuer la garde au sol des chaussons 35, et rapprocher les pattes arrière de leur position classique, au plus près du sol. Ainsi chaque berceau a un profil (suivant la vue de la figure 5) ayant la forme d'une ligne brisée, décomposable de l'avant vers l'arrière en plusieurs segments comme suit : un premier segment 36 s'étendant vers le bas en progressant vers l'arrière, un second segment 37 formant un palier sur lequel est fixé le chausson 35, un troisième segment 38 remontant sensiblement au niveau du point haut du premier segment, puis un quatrième segment 39 allant jusqu'à l'extrémité arrière, de façon sensiblement parallèle au second segment. Le berceau 34 s'appui sur l'axe support 80 à hauteur de son quatrième segment 39.

On note que le déplacement des berceaux et le mouvement imprimé aux chaussons s'effectue suivant une trajectoire ovoïde 0. Cette trajectoire ovoïde permet ainsi de faire se mouvoir les pattes arrière de l'animal d'une façon la plus proche possible de la marche naturelle de l'animal

Le dispositif comprend également des moyens de verrouillage / déverrouillage assurant sélectivement la transmission du mouvement de rotation de l'axe entraîneur 30 à partir de la roue entraîneuse 2 ou à l'inverse la rupture de cette transmission. Il peut, dans certains cas, être en effet souhaitable de débrayer l'axe entraîneur 30 afin de ne pas solliciter les pattes arrière. Cette possibilité témoigne de la flexibilité du dispositif à s'adapter à différents besoins, sans recourir à des appareils distincts. Comme le montre la figure 6 dans un exemple de réalisation, la roue entraîneuse 2 est dans une configuration de rotation libre par rapport au moyens de structure 9 du châssis 1, lorsqu'un organe de verrouillage 40 libère la liaison entre la roue 2 et le pignon commandant la chaine 32 (cas illustré à la figure 6). Lorsque cet organe de verrouillage 40 solidarise la roue 2 et le pignon, la transmission est établie entre la roue et la chaine, ce qui permet donc d'entraîner l'axe entraîneur 30. Dans l'exemple illustré, l'organe de verrouillage 40 est un loquet monté pivotant sur le moyeu de la roue 2, et apte à basculer en prise avec un écrou 41 solidaire en rotation du pignon associé à la chaine. Un ressort de rappel 42 assure que le loquet reste dans une position stable quelle que soit la configuration choisie, verrouillée ou déverrouillée. Dans d'autres variantes de réalisation non illustrées, on peut prévoir d'autres modes de verrouillage / déverrouillage, notamment à molette de serrage ou tout autre moyen équivalent.

Selon un autre aspect de l'invention, et également dans un souci de flexibilité d'utilisation permettant au chien de pouvoir marcher naturellement et sans entrave dans la fin du processus de rééducation, l'axe entraîneur 30 est monté de manière amovible sur le châssis 1. Cet axe 30 peut par exemple comporter des parties déplaçables ou télescopiques dans la direction de l'axe de rotation X, permettant d'emmancher ou d'extraire des embouts d'extrémités de l'axe entraîneur 30 dans des orifices du châssis formant des paliers de guidage.

Dans une variante, les extrémités de l'axe entraîneur 30 peuvent également être retenues par des moyens de type vis - écrou papillon (non représentés) autorisant un montage ou un démontage rapide de l'axe 30.

De la même façon, l'axe support 32 est monté de manière amovible sur le châssis, par des moyens analogues. Il est ainsi possible de retirer complètement l'axe entraîneur, l'axe support, les berceaux et les chaussons, par exemple dans une phase de rééducation avancée, où l'animal aurait recouvré une partie significative de ses capacités motrices. Il resterait néanmoins assisté en étant soutenu par le harnais arrière.

On note en outre que le châssis 1 peut comporter une ou deux béquilles latérales 43 articulées sur des éléments de structure 9, 10 à la base du châssis 1 (figure 1). Ces béquilles 43 maintiennent l'assiette du châssis avant l'installation de l'animal. Elles sont déployables (comme illustré) ou rabattables suivant la flèche G lorsque le dispositif est installé sur l'animal.

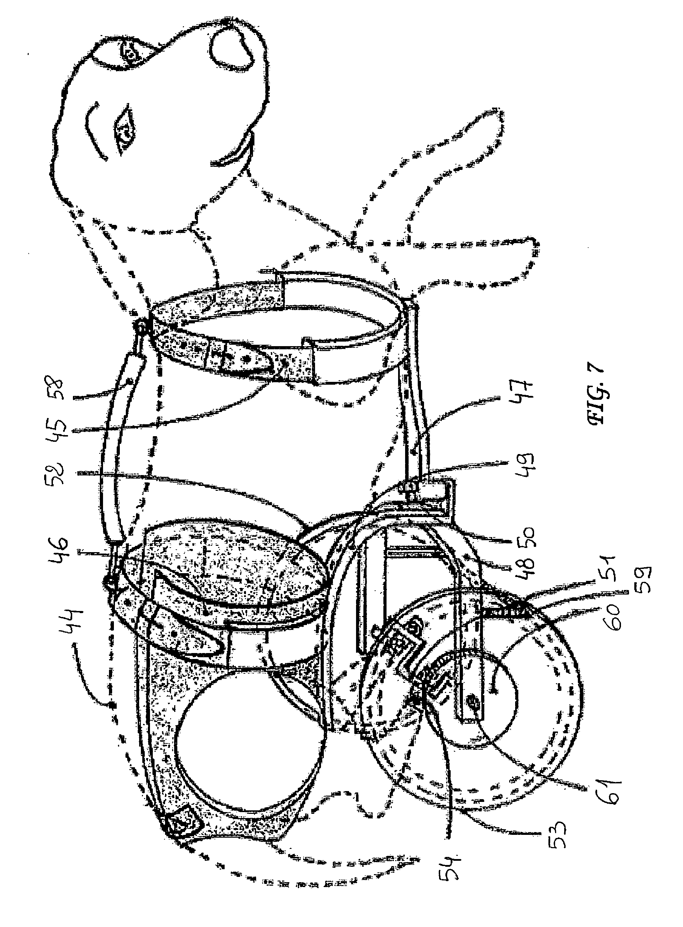

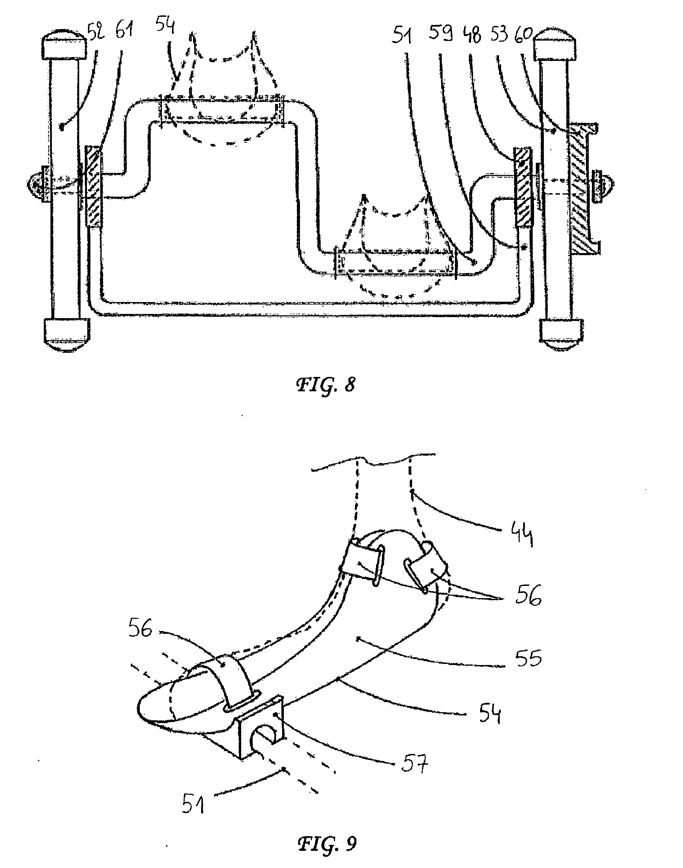

### Deuxième mode de réalisation (figures 7 à 9) :

L'animal 44 est maintenu dans un harnais réalisé en deux parties 45 et 46. Ce harnais est maintenu par un châssis inférieur réalisé également en deux parties 47 et 48. La partie 48 comprend elle-même un sous-ensemble rigide supérieur 49, solidaire de 48 et permettant de soutenir et d'asseoir la partie du harnais 46 destinée à recevoir et soutenir la partie postérieure de l'animal 44. Ce dispositif global permet de maintenir le dit animal à une hauteur adaptée à son stade de rééducation. Un axe 50 est solidaire de l'ensemble des éléments 48, 49 et 46 afin de permettre une liaison articulée latéralement et horizontalement avec l'ensemble des éléments 47 et 45. La partie 48 du châssis reçoit un axe entraîneur 51 de type vilebrequin, lui même disposant d'une roue libre 52 à une extrémité et d'une roue entraineuse 53 du vilebrequin à l'autre extrémité. Le dit vilebrequin 51 permet ainsi de faire se mouvoir deux chaussons 54 opposés l'un à l'autre tel un pédalier. Les chaussons sont composés d'une gouttière 55 recevant la patte de l'animal 44 et celle-ci y sera maintenue par des sangles 56. Un système de clips 57 est intégré aux dites gouttières permettant ainsi de les fixer sur l'axe 51 et ceci en leur laissant la possibilité d'une rotation libre sur le dit axe 51. Chaque chausson 54 évolue de manière excentrique par rapport à sa roue adjacente. Une poignée 58 supérieure de type poignée de valise relie la partie 46 à la partie 45. Un pare-choc 59 est fixé en dessous de la partie 48 et en avant des deux roues 52 et 53 garantissant l'intégrité des pattes de l'animal en cas d'obstacle. Un dispositif composé d'une molette 60 vissée sur l'axe 51 est destiné à verrouiller ou pas et à volonté la roue 53, elle-même responsable de l'entrainement du vilebrequin 51.

Chacune des deux roues sera prisonnière sur l'axe 51, par l'intermédiaire d'un écrou "borgne" 61. La molette 60 est placée entre la roue 53 et son écrou « borgne » adjacent 61.

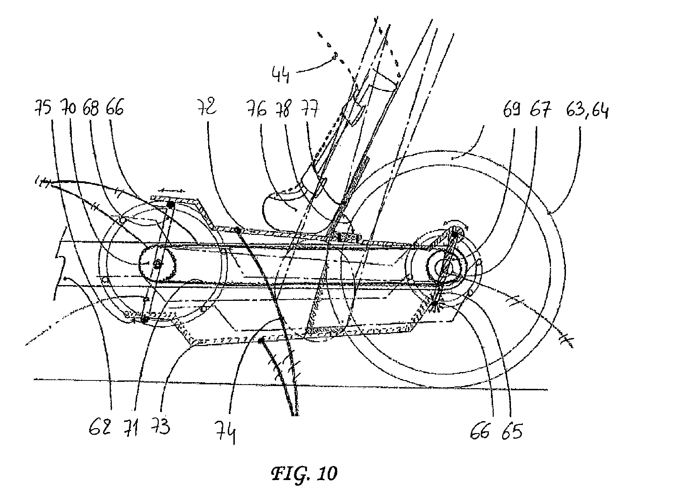

### Troisième mode de réalisation (figure 10) :

L'animal 44 sera suspendu par un harnais au-dessus du dispositif et ce par l'intermédiaire d'un châssis 62. Le dispositif est composé du dit châssis 62 qui comporte sur l'extérieur deux roues 63 et 64 évoluant en parallèle et positionnées longitudinalement à l'animal. Les dites roues sont reliées entre elles par un premier axe entraîneur 65 de type vilebrequin à double manetons 66 afin de pouvoir faire se mouvoir de manière synchrone et en opposition de phase, tel le mouvement d'un pédalier, chacune des deux pattes arrière du dit animal. L'une des roues 63 entraine le dit vilebrequin 65 et ce à volonté grâce au verrouillage/ déverrouillage par une mollette 67 de la dite roue 63 au dit vilebrequin 65. Ceci permet la mise en exercice ou pas du train arrière du dit animal lors de ses déplacements. La deuxième roue 64 reste libre. Le dit axe entraîneur 65 de type vilebrequin fonctionne de concert avec un deuxième vilebrequin dit axe suiveur 68 de même type et ce dernier est positionné en avant par rapport au premier 65. Une liaison par deux pignons égaux 69 et 70 et une chaine de transmission 71 les reliant, synchronise les deux vilebrequins 65 et 68 entre eux. Deux berceaux 72 et 73 positionnés parallèlement entre eux relient les deux vilebrequins 65 et 68 entre eux par l'intermédiaire de leurs manetons 66, à raison d'un maneton sur chacun des deux vilebrequins. Les deux vilebrequins 65 et 68 sont toutefois d'un diamètre différent afin de permettre aux dits berceaux 72 et 73 d'évoluer sur une trajectoire ovoïde 74. Cette trajectoire ovoïde permet ainsi de faire se mouvoir les pattes arrière de l'animal sur une trajectoire la plus proche possible de la marche naturelle de l'animal. Le vilebrequin entraineur 65, positionné en arrière, est celui ayant un diamètre inférieur par rapport à l'autre vilebrequin 68 (dans une variante, il peut avoir un diamètre supérieur à ce dernier). Les dits berceaux 72, 73 sont reliés et articulés seulement sur les manetons du seul vilebrequin arrière 65 et ne font que reposer sur les manetons du vilebrequin suiveur 68 où ils y glissent sur leur zone inférieure 75. Ceci permet de résoudre le problème des distensions liées à l'éloignement des manetons entre eux lors de leur révolution sur leur vilebrequin respectif.

Deux chaussons 76 sont alors positionnés et fixés sur les deux berceaux 72 et 73 à raison d'un par berceau et reçoivent chacun une patte arrière du dit animal. Les dites pattes sont maintenues fermement par leur métatarse dans leur chausson respectif. Les dits chaussons sont chacun solidarisé sur leur berceau respectif par un support 77 suivant un angle 78 défini afin d'imposer aux pattes du dit animal une orientation adéquate optimisant et harmonisant ses mouvements. Il en résulte alors que les articulations « épaule », « coude » et « talon » du dit animal sont sollicitées par l'impulsion imposée par le dispositif comme illustré à la figure 10. Cette précision concernant le positionnement des chaussons peut également s'appliquer au premier mode de réalisation de l'invention.

Bien entendu, l'invention n'est pas limitée aux moyens qui viennent d'être décrits et comprend tous les équivalents techniques.

Par exemple les moyens de transmission à chaîne peuvent être remplacés par un système à courroie, ou même par un ensemble de pignons.

## Revendications

1. Dispositif permettant à un animal quadrupède handicapé de son train arrière de se déplacer tout en exerçant automatiquement des mouvements avec ses pattes arrières le dispositif comprenant
- un châssis (1 ; 47-49 ; 62) sur lequel sont montées deux roues (2, 3 ; 52, 53 ; 63, 64) latérales, **caractérisé en ce qu'**il comprend :
- un harnais arrière (4 ; 46) destiné à recevoir et soutenir la partie postérieure de l'animal, apte à être maintenu par le châssis,
- un axe entraîneur (30 ; 51 ; 65) de type vilebrequin à deux manetons auxquels sont reliés des moyens d'entraînement (34, 35 ; 54 ; 72, 73, 76) des pattes arrière de l'animal, ledit axe entraîneur (30 ; 51 ; 65) étant conformé de manière à mouvoir de manière synchrone et en opposition de phase, tel le mouvement d'un pédalier, chacune des deux pattes arrière de l'animal,
- des moyens de transmission (80 ; 71) apte à commander la rotation de l'axe entraîneur (30 ; 51 ; 65) à partir d'au moins une roue (2 ; 53 ; 63).

2. Dispositif selon la revendication 1, **caractérisé en ce que** les moyens de transmission (80 ; 71) comprennent des moyens de verrouillage / déverrouillage (40, 41 ; 60) assurant sélectivement la transmission effective du mouvement de rotation de l'axe entraîneur (30 ; 51 ; 65) à partir d'au moins une roue (2 ; 53 ; 63) ou la rupture de cette transmission.

3. Dispositif selon la revendication 1 ou 2, **caractérisé en ce que** l'axe entraîneur (30 ; 51 ; 65) est monté à rotation de manière amovible sur le châssis (1 ; 47-49 ; 62).

4. Dispositif selon l'une quelconque des revendications précédentes, **caractérisé en ce que** le harnais arrière (4 ; 46) comporte une armature fixée au châssis (1) par des moyens d'encliquetage (24), autorisant notamment un débattement vertical du harnais arrière (4 ; 46).

5. Dispositif selon l'une quelconque des revendications précédentes, **caractérisé en ce qu'**il comporte des moyens de réglage en hauteur de la position verticale du harnais arrière (4 ; 46) par rapport au châssis (1 ; 47-49), ces moyens de réglage en hauteur étant notamment du type à pignon-crémaillère.

6. Dispositif selon l'une quelconque des revendications précédentes, **caractérisé en ce que** le harnais arrière (4) à la forme générale d'une ceinture entourant l'abdomen de l'animal pourvue d'une extension 17 constituant un appui pelvien.

7. Dispositif selon l'une quelconque des revendications précédentes, **caractérisé en ce que** les moyens d'entraînement des pattes arrière de l'animal comprennent deux chaussons (35 ; 54 ; 76) dans lesquels sont reçues et maintenues les deux pattes arrière de l'animal afin de les faire évoluer à la manière d'un pédalier.

8. Dispositif selon l'une quelconque des revendications précédentes, **caractérisé en ce qu'**il comprend des moyens d'attelage (26 ; 47, 50) apte à relier la partie thoracique de l'animal au châssis (1 ; 48, 49) via un harnais avant (5 ; 45), lesdits moyens d'attelage étant en particulier pivotables par rapport au châssis (1).

9. Dispositif selon la revendication 8, **caractérisé en ce que** les moyens d'entraînement des pattes arrière de l'animal comprennent deux berceaux (34 ; 72, 73) sur lesquels sont fixés respectivement les deux chaussons (35, 76).

10. Dispositif selon la revendication 9, **caractérisé en ce que** l'axe entraîneur (30) est situé à l'avant des roues (2, 3) suivant la direction longitudinale avant-arrière, chaque berceau (34) étant entraîné à l'avant par un maneton (31) respectif de l'axe entraîneur sur lequel il est monté à rotation, et reposant à l'arrière en appui sur un axe support (32) porté par le châssis (1).

11. Dispositif selon la revendication 9 ou 10, **caractérisé en ce que** chaque berceau (34) comprend une partie avant abaissée conférant une garde au sol abaissée par rapport à la partie arrière.

12. Dispositif selon l'une quelconque des revendications 8 à 11, **caractérisé en ce que** l'axe entraîneur (51) est sensiblement coaxial avec l'axe des roues, le châssis comprenant une partie antérieure (47) et une partie postérieure (48, 49), la partie postérieure (48, 49) comprenant elle-même un sous-ensemble rigide supérieur (48) servant à soutenir le harnais arrière (46), tandis que la partie antérieure (47) est montée à rotation par rapport à la partie postérieure (48, 49) autour d'un axe (50) sensiblement vertical, la partie antérieure (47) étant en outre reliée au harnais avant (45).

13. Dispositif selon l'une quelconque des revendications 9 à 11, **caractérisé en ce que** l'axe entraîneur (65) est sensiblement coaxial avec l'axe des roues (63, 64), le dispositif comprenant en outre un axe suiveur (68) de type vilebrequin à deux manetons situé à l'avant de l'axe entraîneur (65), et entraîné par ce dernier via des moyens de transmission (71), chaque berceau (72, 73) étant entraîné à l'arrière par un maneton (66) respectif de l'axe entraîneur (65) sur lequel il est monté à rotation, et reposant à l'avant en appui sur un maneton (66) correspondant de l'axe suiveur (68).

14. Dispositif selon l'une quelconque des revendications précédentes, **caractérisé en ce qu'**une seule roue (2 ; 53 ; 63) est apte à entraîner l'axe entraîneur (30 ; 51 ; 65) tandis que l'autre roue est libre.

15. Dispositif selon l'une quelconque des revendications précédentes, **caractérisé en ce que** le rapport de démultiplication entre l'axe entraîneur (30 ; 51 ; 65) et la roue d'entraînement (2 ; 53 ; 63) est compris entre 1/3 et 1, et est en particulier de 1/2.

## Patentansprüche

1. Vorrichtung, mit der ein vierbeiniges Tier, das an seinem Hinterteil behindert ist, sich fortbewegen kann und dabei automatisch Bewegungen mit seinen Hinterbeinen ausführt, wobei die Vorrichtung enthält:
- ein Gestell (1; 47 - 49; 62), an dem zwei seitliche Räder (2, 3; 52, 53; 63, 64) montiert sind,
**dadurch gekennzeichnet, dass** sie aufweist:
- ein hinteres Geschirr (4; 46), das dazu bestimmt ist, das hintere Teil des Tieres aufzunehmen und abzustützen, und über das Gestell festgehalten werden kann,
- eine Antriebsachse (30; 51; 65), die als Kurbelwelle mit zwei Kurbelzapfen ausgeführt ist, mit denen Antriebsmittel (34, 35; 54; 72, 73, 76) für die Hinterbeine des Tiers verbunden sind, wobei die Antriebsachse (30; 51; 65) so ausgebildet ist, dass sie jedes der beiden Hinterbeine des Tieres synchron in Gegenphase bewegt, wie etwa bei der Bewegung einer Tretkurbel,
- Übertragungsmittel (80; 71), die geeignet sind, die Drehung der Antriebsachse (30; 51, 65) ausgehend von zumindest einem Rad (2; 53; 63) zu steuern.

2. Vorrichtung nach Anspruch 1, **dadurch gekennzeichnet, dass** die Übertragungsmittel (80; 71) Verriegelungs-/Entriegelungsmittel (40, 41; 60) aufweisen, die wahlweise die wirkungsvolle Übertragung der Drehbewegung der Antriebsachse (30; 51; 65) ausgehend von zumindest einem Rad (2; 53; 63) oder die Unterbrechung dieser Übertragung gewährleisten.

3. Vorrichtung nach Anspruch 1 oder 2, **dadurch gekennzeichnet, dass** die Antriebsachse (30; 51; 65) drehbar und abnehmbar am Gestell (1; 47 - 49; 62) gelagert ist.

4. Vorrichtung nach einem der vorangehenden Ansprüche, **dadurch gekennzeichnet, dass** das hintere Geschirr (4; 46) eine Bewehrung aufweist, die über Einrastmittel (24) an das Gestell (1) befestigt ist, wodurch insbesondere eine vertikale Auslenkung des hinteren Geschirrs (4; 46) möglich ist.

5. Vorrichtung nach einem der vorangehenden Ansprüche, **dadurch gekennzeichnet, dass** sie Mittel zur Höheneinstellung der vertikalen Stellung des hinteren Geschirrs (4; 46) bezüglich des Gestells (1; 47 - 49) aufweist, wobei diese Höheneinstellmittel insbesondere als Ritzel-/Zahnstangenanordnung ausgeführt sind.

6. Vorrichtung nach einem der vorangehenden Ansprüche, **dadurch gekennzeichnet, dass** das hintere Geschirr (4) in Form eines Gurts vorliegt, der den Unterleib des Tieres umgibt und mit einer Erweiterung (17) versehen ist, welche eine Beckenstütze bildet.

7. Vorrichtung nach einem der vorangehenden Ansprüche, **dadurch gekennzeichnet, dass** die Antriebsmittel für die Hinterbeine des Tieres zwei Schuhe (35; 54; 76) umfassen, in welche die beiden Hinterbeine des Tieres aufgenommen und gehalten werden, um sie nach Art einer Tretkurbel in Bewegung zu versetzen.

8. Vorrichtung nach einem der vorangehenden Ansprüche, **dadurch gekennzeichnet, dass** sie Ankoppelungsmittel (26; 47, 50) aufweist, die geeignet sind, den Brustbereich des Tieres über ein vorderes Geschirr (5; 45) mit dem Gestell (1; 48, 49) zu verbinden, wobei die Ankoppelungsmittel insbesondere gegenüber dem Gestell (1) verschwenkbar ausgeführt sind.

9. Vorrichtung nach Anspruch 8, **dadurch gekennzeichnet, dass** die Antriebsmittel für die Hinterbeine des Tieres zwei Bügel (34; 72, 73) aufweisen, an welche die beiden jeweiligen Schuhe (35, 76) befestigt sind.

10. Vorrichtung nach Anspruch 9, **dadurch gekennzeichnet, dass** die Antriebsachse (30) in Längsrichtung von vom nach hinten gesehen sich vor den Rädern (2, 3) befindet, wobei jeder Bügel (34) auf der Vorderseite über einen jeweiligen Zapfen (31) der Antriebsachse angetrieben wird, an welcher er drehbar gelagert ist, und auf der Hinterseite in Anlage an einer Tragachse (32) aufliegt, die von dem Gestell (1) getragen wird.

11. Vorrichtung nach Anspruch 9 oder 10, **dadurch gekennzeichnet, dass** jeder Bügel (34) einen tiefer gelegten vorderen Bereich umfasst, der eine gegenüber dem hinteren Bereich tiefere Bodenfreiheit gewährleistet.

12. Vorrichtung nach einem der Ansprüche 8 bis 11, **dadurch gekennzeichnet, dass** die Antriebsachse (51) im wesentlichen koaxial zur Achse der Räder verläuft, wobei das Gestell einen vorderen Bereich (47) und einen rückwärtigen Bereich (48, 49) aufweist, wobei der rückwärtige Bereich (48, 49) seinerseits eine starre, obere Untereinheit (48) enthält, die dazu dient, das hintere Geschirr (46) abzustützen, während der vordere Bereich (47) gegenüber dem rückwärtigen Bereich (48, 49) um eine im wesentlichen vertikal verlaufende Achse (50) herum drehbar gelagert ist, wobei der vordere Bereich (47) ferner mit dem vorderen Geschirr (45) verbunden ist.

13. Vorrichtung nach einem der Ansprüche 9 bis 11, **dadurch gekennzeichnet, dass** die Antriebsachse (65) im wesentlichen koaxial zur Achse der Räder (63, 64) verläuft, wobei die Vorrichtung ferner eine Nachführachse (68) aufweist, die als Kurbelwelle mit zwei Kurbelzapfen ausgeführt ist, die sich vor der Antriebsachse (65) befindet und von letzterer über Übertragungsmittel (71) angetrieben wird, wobei jeder Bügel (72, 73) auf der Rückseite über einen jeweiligen Zapfen (66) der Antriebsachse (65) angetrieben wird, an welcher er drehbar gelagert ist, und auf der Vorderseite in Anlage an einem entsprechenden Zapfen (66) der Nachführachse (68) aufliegt.

14. Vorrichtung nach einem der vorangehenden Ansprüche, **dadurch gekennzeichnet, dass** nur ein Rad (2; 53; 63) dazu vorgesehen ist, die Antriebsachse (30; 51; 65) anzutreiben, während das andere Rad frei umläuft.

15. Vorrichtung nach einem der vorangehenden Ansprüche, **dadurch gekennzeichnet, dass** das Übersetzungsverhältnis zwischen Antriebsachse (30; 51; 65) und Antriebsrad (2; 53; 63) zwischen 1/3 und 1 liegt und insbesondere 1/2 beträgt.

## Claims

1. A device allowing a quadruped animal that is disabled in the hindquarters thereof to move about, while automatically moving the hind legs of the animal, the device comprising
- a chassis (1; 47-49; 62), on which two side wheels (2, 3; 52, 53; 63, 64) are mounted,
**characterized by** comprising:
- a rear harness (4; 46) for receiving and supporting the hindquarters of the animal, which harness can be supported by the chassis;
- a crankshaft-type driveshaft (30; 51; 65) having two crankpins to which are attached means (34, 35; 54; 72, 73, 76) for moving the hind legs of the animal, said driveshaft (30; 51; 65) being shaped so as to move each of the two hind legs of the animal synchronously in phase opposition like the movement of a chainset,
- transmission means (80; 71) for controlling rotation of the driveshaft (30; 51; 65) from at least one wheel (2; 53; 63).

2. The device according to claim 1, **characterised in that** the transmission means (80; 71) include locking/unlocking means (40, 41; 60) selectively providing the actual transmission of the rotational movement of the driveshaft (30; 51; 65) from at least one wheel (2; 53; 63) or the discontinuation of this transmission.

3. The device according to claim 1 or 2, **characterised in that** the driveshaft (30; 51; 65) is removably rotatably mounted to the chassis (1; 47-49; 62).

4. The device according to any of the preceding claims, **characterised in that** the rear harness (4; 46) includes a frame attached to the chassis (1) by pawling means (24), allowing in particular a vertical stroke of the rear harness (4; 46).

5. The device according to any of the preceding claims, **characterised in that** it includes height adjusting means for the vertical position of the rear harness (4; 46) with respect to the chassis (1; 47-49), such height adjusting means being in particular of the rack-and-pinion type.

6. The device according to any of the preceding claims, **characterised in that** the rear harness (4) is generally in the shape of a belt surrounding the abdomen of the animal, which belt is provided with an extension (17) making up a pelvic bracket.

7. The device according to any of the preceding claims, **characterised in that** the means for moving the hind legs of the animal include two slippers (35; 54; 76) wherein the two hind legs of the animal are received and supported in order for them to move as a chainset.

8. The device according to any of the preceding claims, **characterised in that** it includes harnessing means (26; 47, 50) able to attach the thoracic part of the animal to the chassis (1; 48, 49) via a front harness (5; 45), said harnessing means being in particular pivotable with respect to the chassis (1).

9. The device according to claim 8, **characterised in that** the means for moving the hind legs of the animal include two cradles (34; 72, 73) to which the two slippers (35, 76) are attached respectively.

10. The device according to claim 9, **characterised in that** the driveshaft (30) is located ahead of the wheels (2, 3) relatively to the front-rear longitudinal direction, each cradle (34) being driven at the front by a respective crankpin (31) of the driveshaft on which it is rotatably mounted, and resting at the rear on a supporting shaft (32) carried by the chassis (1).

11. The device according to claim 9 or 10, **characterised in that** each cradle (34) includes a lowered front part providing a ground clearance lowered with respect to the rear part.

12. The device according to any of claims 8 to 11, **characterised in that** the driveshaft (51) is substantially coaxial with the axis of the wheels, the chassis including an anterior part (47) and a posterior part (48, 49), the posterior part (48, 49) in turn including an upper rigid subassembly (48) for supporting the rear harness (46), whereas the anterior part (47) is rotatably mounted with respect to the posterior part (48, 49) about a substantially vertical axis (50), the anterior part (47) being further attached to the front harness (45).

13. The device according to any of claims 9 to 11, **characterised in that** the driveshaft (65) is substantially coaxial with the axis of the wheels (63, 64), the device further including a crankshaft-type follower shaft (68) with two crankpins, which shaft is located ahead of the driveshaft (65), and driven by the same via a transmission means (71), each cradle (72, 73) being driven at the rear by a respective crankpin (66) of the driveshaft (65) on which it is rotatably mounted, and resting at the front on a corresponding crankpin (66) of the follower shaft (68).

14. The device according to any of the preceding claims, **characterised in that** a sole wheel (2; 53; 63) is able to drive the driveshaft (30; 51; 65) whereas the other wheel is free.

15. The device according to any of the preceding claims, **characterised in that** the reduction ratio between the driveshaft (30; 51; 65) and the driving wheel (2; 53; 63) is between 1/3 and 1, and is in particular 1/2.
